# FASCICULE DE BREVET EUROPEEN

(11) **EP 0 720 907 B1**
(45) Date de publication et mention de la délivrance du brevet: **05.11.1997**
(21) Numéro de dépôt: 95440077.6
(22) Date de dépôt: 20.11.1995
(51) Int. Cl.: B29C 65/06

(54) **Procédé pour la soudure sans apport thermique de deux pièces en matière thermoplastique**
Verfahren zum Schweissen, ohne Wärmezufuhr, von zwei thermoplastischen Teilen
Process for welding without heat application of two thermoplastic articles

(30) Priorité: 23.12.1994 FR 9415731
(43) Date de publication de la demande: 10.07.1996
(73) Titulaire: OMEGAL (Société Anonyme), 67540 Ostwald (FR)
(72) Inventeur: Wigishof, Jean-Jacques, F-67190 Dinsheim (FR); Fullenwarth, Jean-Bernard, F-67000 Strasbourg (FR); Kieffer, Gérard, F-67130 Lutzelhouse (FR)
(74) Mandataire: Littolff, Denis

(56) Documents cités:
- EP-A- 0 610 776
- BE-A- 666 748
- DE-A- 4 244 017
- DE-U- 9 200 239
- FR-A- 2 713 540
- GB-A- 1 421 326
- GB-A- 1 569 410
- US-A- 4 601 927
- WELDING IN THE WORLD, vol. 35, no. 2, 1 Mars 1995, pages 138-146, XP000501642 "VIBRATION WELDING OF MOULDED PARTS AND SEMI-FINISHED PARTS OF THERMOPLASTIC POLYMERS IN MASS PRODUCTION"
- PLASTIQUES MODERNES ET ELASTOMERES, vol. 34, no. 2, PARIS FR, pages 48-50, XP002000234 "SOUDAGE PAR VIBRATION : CADENCES EN HAUSSE"
- WELDING IN THE WORLD, vol. 30, OXFORD GB, XP000320924 DVS: "Heated tool welding of thermoplastic mouldings in series production"

## Description

La présente invention concerne des perfectionnements aux procédés pour la jonction de deux pièces en matière thermoplastique par un processus de soudure faisant intervenir un phénomène de fusion de la matière sans apport thermique extérieur.

Ces procédés sont utilisés généralement pour des couples de pièces créant, une fois réunies, un volume creux délimité latéralement par la soudure d'un cordon relativement étroit de la première pièce sur une surface sensiblement plane de la seconde pièce.

A titre d'exemples, on peut citer les becquets pour automobiles, les trappes ou clapets de fermeture, comme les trappes obturant et dissimulant les orifices d'alimentation de carburant ou les prises de charge, les combinés téléphoniques ou des boîtiers de calculatrices, ainsi que les façades ou portes doublées et aménagées pour des ustensiles ou appareils ménagers, tels que par exemple les machines à laver, les armoires de salles de bain, et plus généralement les pièces esthétiques ou techniques, habituellement massives, mais qui peuvent ainsi être réalisées creuses par l'association d'un "dessus" et d'un "dessous", ou "peau" et "doublure".

Les procédés de soudure de telles pièces faisant appel à la fusion de la matière sous l'effet d'un apport thermique extérieur ne donnent pas de bons résultats en raison des déformations pratiquement inévitables que provoquent de tels procédés.

C'est pourquoi ont été développées diverses techniques faisant appel à un phénomène de fusion locale sans apport thermique extérieur.

Une première technique consiste à conférer à la première pièce une vibration perpendiculaire à la surface de la seconde pièce maintenue immobile, à une fréquence ultrasonique, de l'ordre de 20.000 périodes. La première pièce comporte un cordon à section triangulaire, le sommet du triangle subissant, par son contact à ladite fréquence avec la surface de la seconde pièce, un échauffement local déterminant sa fusion et par suite la jonction entre les deux pièces. Compte-tenu de ce processus, ledit cordon est généralement désigné par "directeur d'énergie".

Une seconde technique consiste à conférer à la première pièce une vibration parallèle à la surface de la seconde pièce, soit linéaire, soit rotative. Dans ce cas, le frottement continu d'un cordon de la première pièce sur la surface de la seconde pièce maintenue immobile fait naître un échauffement à la fois de durée limitée et d'amplitude localisée à la faible surface de contact entre le cordon de la première pièce et la surface de la seconde pièce. Cet échauffement provoque une fusion également limitée dans le temps et l'espace, sans distorsions ou irrégularités, ni autre limitation comme dans les techniques antérieures avec apport thermique rappelées ci-dessus.

Cette technique est notamment divulguée par le brevet britannique GB-A-1 421 326, et appliquée à la fabrication d'un "verre" de phare constitué de deux moitiés en résine synthétique. Elle consiste à imprimer à l'une de ces moitiés un mouvement dit "orbital" au contact de l'autre moitié qui reste fixe. Le champ d'un rebord de la partie mobile vient faire fondre par frottement la face latérale d'une nervure située sous l'autre partie. Cela crée une solidarisation par soudure des deux pièces, sans qu'il y ait contact, donc fusion, entre les faces frontales formant la surface extérieure du phare.

Toutefois, la technique décrite s'applique à la jonction de deux champs étroits des deux pièces en regard, et non pas du champ étroit de l'une sur une surface plane de l'autre dont le verso est la surface visible à l'utilisateur.

Le risque de pénétration et ses conséquences notamment esthétiques ne sont donc pas pris en compte dans la résolution de ce problème particulier de soudage par friction.

Pour la commodité de la description, on va se référer ci-après à la réalisation d'un produit creux, tel qu'une trappe à essence, rectangulaire ou circulaire, par jonction par soudure d'une pièce extérieure visible et servant d'habillage au produit, désignée par "peau", et d'une pièce intérieure, située à l'arrière du produit, et désignée par "doublure", cette jonction s'effectuant par la technique de vibration longitudinale ou rotative provoquant la fusion locale d'un cordon désigné par "muret", et ayant pour but d'assurer une bonne tenue à l'arrachement c'est-à-dire à la désolidarisation des pièces, ainsi qu'une esthétique satisfaisante par absence de bavures visibles et de retassures.

En effet, dans cette technique, le muret pouvant être porté indifféremment par la peau ou la doublure, le champ du muret, lors de la soudure, fondant à un certain degré, ainsi que la surface en regard de la pièce contre laquelle il est appliqué avec une certaine pression, il en résulte que le muret pénètre à un certain degré dans l'épaisseur de ladite surface en regard, ce qui implique un certain rapprochement entre les deux pièces à réunir.

Or, dans la pratique, on a constaté que cette pénétration a pour effet d'affecter l'état de la surface extérieure de la peau, en créant des retassures optiquement inesthétiques ; par ailleurs, la matière fondue tend à fluer sur les côtés du muret, ce qui crée des bavures également inesthétiques.

Par ailleurs, dans le cas où le muret est porté par la peau, il doit avoir une certaine épaisseur, de manière à permettre la vibration de la doublure tout en assurant son support et son contact. L'augmentation de cette épaisseur implique naturellement une augmentation correspondante du poids de la pièce. En effet, un muret plus épais entraîne une augmentation de l'épaisseur de toute la pièce.

Les recherches expérimentales de la déposante l'ont conduit à découvrir que, pour écarter les inconvénients de cette technique, c'est-à-dire pour obtenir l'effet de jonction optimal, à la fois du point de vue technique et du point de vue esthétique, il était avantageux de repousser le muret jusqu'à une distance aussi faible que possible du bord extérieur de la pièce qui le porte, et qui soit compatible avec l'amplitude de vibration, à savoir à une distance de l'autre pièce au moins égale à la demi-amplitude de la vibration.

A cet effet, le procédé de l'invention, pour la jonction, par la technique de soudage par vibration, de deux pièces en matière thermoplastique, une première pièce présentant une première surface et une seconde pièce comportant un cordon ou "muret" sur une seconde surface en regard de ladite première surface, le champ de ce muret venant en pression contre ladite première surface de manière que, par mise en vibration de l'une desdites pièces au contact de l'autre, un phénomène de fusion sans chauffage de la matière des deux pièces assure la jonction entre ledit champ dudit muret de la seconde pièce et ladite première surface de la première pièce, est caractérisé en ce que, ladite première surface étant une surface intérieure lisse de la première pièce et ladite seconde surface portant ledit muret étant une surface intérieure de la seconde pièce, en vue d'assurer la soudure du champ dudit muret contre ladite surface intérieure lisse sans affecter l'état de la surface extérieure correspondante de la première pièce, on munit au moins l'une des deux pièces d'un rebord ou retour périphérique, de telle manière que ledit muret soit situé d'une part à la distance la plus faible possible du bord extérieur de la pièce qui le porte et, dans le cas où la pièce qui le porte présente un tel rebord, qu'il fasse de préférence partie intégrante dudit rebord, et soit d'autre part à une distance du bord de l'autre pièce au moins égale à la moitié de l'amplitude de ladite vibration.

Dans la pratique, selon l'invention, chacune des deux pièces en jeu, à savoir la peau et la doublure, comportant un retour, le muret sera de préférence constitué ou porté par ce retour lui-même.

De préférence encore, on a prévu au-delà dudit muret sur la pièce intérieure une butée ayant une hauteur inférieure à celle dudit muret d'une valeur égale à la distance d'interpénétration dudit muret dans la surface de la pièce extérieure.

Selon une possibilité, les retours des deux pièces sont perpendiculaires aux faces en regard desdites pièces.

Une variante consiste cependant en ce que les retours soient inclinés, le retour de la pièce extérieure étant évasé vers l'extérieur, l'écart entre les retours avant soudure étant tel qu'après enfoncement au moment de la soudure, l'écart subsistant est approximativement égal à la demi-amplitude de ladite vibration.

Dans cette réalisation, une variante également préférée consiste à donner aux retours de la peau et de la doublure une inclinaison sur la verticale de l'ordre de 10 - 30 degrés, de telle sorte que la bavure qui se forme entre les deux retours soit dissimulée, même pour un observateur situé à l'arrière du produit fini.

Selon un perfectionnement de cette réalisation, la doublure comporte un décrochement, décalé latéralement par rapport au retour, et d'une hauteur inférieure, destiné à constituer une butée limitant l'interpénétration du retour de la doublure dans l'épaisseur de la peau.

Selon une seconde réalisation, l'assemblage est du type à joint latéral, et dans ce cas, selon l'invention, le muret est formé dans l'épaisseur du retour, en étant éloigné du plan de joint par une portion en creux d'une largeur approximativement égale à l'amplitude de la vibration, de manière à permettre le débattement de la pièce mobile par rapport au muret sans cesser d'être supporté par lui avec plein contact, pour assurer la fusion et donc la jonction.

Dans ce second cas, la peau et la doublure jouent des rôles interchangeables.

Dans le cas d'un couple de pièces rectangulaires à réunir, la distance, dans la direction parallèle au sens des vibrations, du bord extérieur du muret au bord intérieur de l'autre pièce peut être réduite au-dessous de ladite demi-amplitude.

L'invention concerne également les articles réalisés par la jonction de deux pièces en matière thermoplastique, une première pièce présentant une première surface et une seconde pièce comportant un cordon ou "muret" sur une seconde surface en regard de ladite première surface, le champ de ce muret venant en pression contre ladite première surface de manière que, par mise en vibration de l'une desdites pièces au contact de l'autre, un phénomène de fusion sans chauffage de la matière des deux pièces assure la jonction entre ledit champ dudit muret de la seconde pièce et ladite première surface de la première pièce, caractérisés en ce que, ladite première surface étant une surface intérieure lisse de la première pièce et ladite seconde surface portant ledit muret étant une surface intérieure de la seconde pièce, la soudure du champ dudit muret contre ladite surface intérieure lisse étant assurée sans affecter l'état de la surface extérieure correspondante de la première pièce, l'une des deux pièces présente un rebord ou retour périphérique, de telle manière que ledit muret soit situé d'une part à la distance la plus faible possible du bord extérieur de la pièce qui le porte et, dans le cas où la pièce qui le porte présente un tel rebord, qu'il fasse de préférence partie intégrante dudit rebord, et soit d'autre part à une distance du bord de l'autre pièce au moins égale à la moitié de l'amplitude de ladite vibration..

Une application de ces articles consiste par exemple en une trappe à essence.

On comprendra mieux l'invention en se reportant à la description détaillée ci-après, illustrant ses caractéristiques par rapport à l'état de la technique. A l'appui de cette description, le dessin annexé représente :

Sur la figure 1, le principe général connu du procédé, le "muret" étant porté par la "peau".

Sur la figure 2, le même principe, le muret étant porté par la "doublure".

Sur la figure 3, le principe général de l'invention, dans la variante d'assemblage à champ couvrant.

Sur les figures 4a et 4b, l'application du principe de l'invention à un couple de pièces à retours inclinés, avant et après soudure, respectivement.

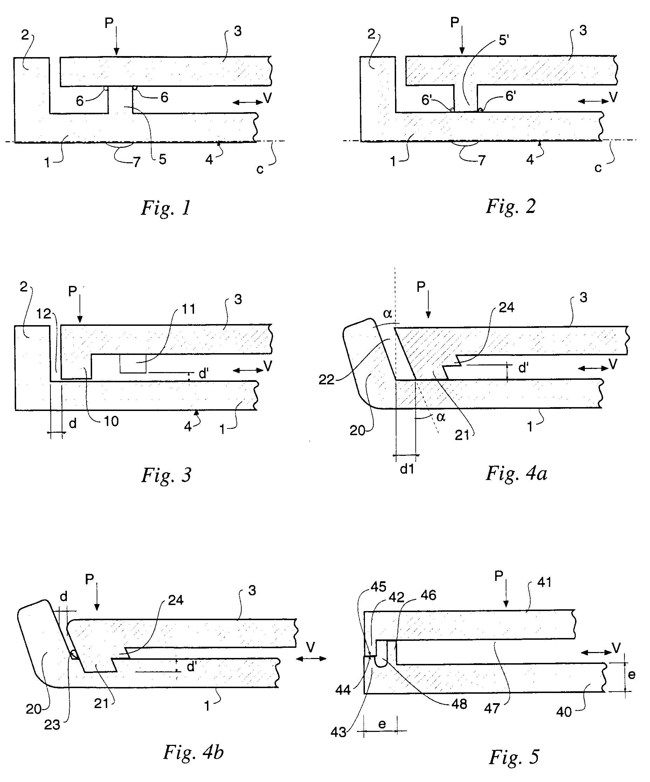

Et sur la figure 5, l'application de l'invention à un assemblage à joint latéral.

Sur toutes les figures, les dimensions ont été volontairement fortement grossies, pour la commodité de la compréhension : dans ce grossissement, les proportions n'ont pas été partout respectées, dans le même but. Ainsi, dans l'exemple d'une trappe à essence, l'épaisseur des pièces est d'environ 3 mm, tandis que la vibration appliquée à la pièce portant le muret a une amplitude de 0,2 à 2,0 mm.

On va tout d'abord se référer rapidement aux figures 1 et 2 pour exposer le principe général du procédé et le problème posé, dans le cas de l'application d'une trappe à essence.

Une trappe à essence se compose d'une pièce extérieure, ou "peau" 1, présentant un retour périphérique 2, et d'une pièce intérieure ou "doublure" 3, qui doit être réunie à la peau pour créer un volume dont la face avant 4 est visible au ras de la carrosserie C.

La jonction de la peau 1 et de la doublure 2 ne peut pas se faire sur toute la superficie de leurs surfaces en regard, sauf à admettre certains défauts optiques dans la surface 4.

Le principe du procédé utilisé pour cette jonction repose sur la soudure du champ d'un cordon ou muret 5, 5' porté soit par la peau 1, soit par la doublure 3, respectivement contre la face en regard de la doublure 3 ou de la peau 1, cette soudure résultant de la fusion de la matière de ce champ, sans apport thermique extérieur, sous l'action d'une vibration de la doublure 3 dans la direction V parallèle à la surface intérieure de la peau 1. Cette vibration, d'une amplitude d'environ 1 mm et à une fréquence de l'ordre de quelques centaines de Hertz, provoque localement la fusion de la matière des portions en contact des deux pièces, et elle est accompagnée d'une pression exercée dans la direction perpendiculaire P. Cette pression sur les surfaces en fusion en contact provoque la jonction des deux pièces 1 et 3, avec une légère interpénétration du muret 5 et de la doublure 3, ou du muret 5' et de la peau 1, et un léger fluage de la matière fondue vers les zones 6, 6' entourant la jonction.

En l'absence de précautions, ces bavures 6, 6', qui contribuent à la cohésion après soudage, sont visibles depuis l'arrière de la trappe, et sont inesthétiques. Au surplus, on court le risque de provoquer sur la surface 4 de la peau des retassures dans la région 7, qui sont optiquement inesthétiques.

L'invention consiste à placer le muret 5, 5' par rapport à la doublure 3 le plus à l'extérieur qu'il est possible, tout en conservant l'amplitude de vibration nécessaire.

Selon le premier mode de réalisation, illustré aux figures 3, 4a, 4b, le muret constitue un retour 10 sur la périphérie de la doublure 3, et est situé à une distance d de la face interne du retour 2 permettant la vibration de la doublure 3 par rapport à la peau fixe 1. Cette distance d doit être de l'ordre de la moitié de l'amplitude de la vibration, soit, dans cet exemple, d'environ 0,1 à 1 mm.

Sous l'effet de la pression P, au moment de la vibration, la base en fusion du muret 10 va pénétrer dans la surface en fusion de la peau 1. Pour limiter cette interpénétration, il est prévu, selon l'invention, une butée 11, dont la base, avant la soudure, est à une distance d' de la peau, cette distance d' représentant la profondeur d'interpénétration maximale autorisée dans la peau, de telle sorte que tout risque de retassure dans la surface 4 est éliminé.

A l'inverse, quand la butée 11 arrive au contact de la peau 3, la pression P augmente, ce qui constitue le repérage et la détection de cette arrivée au contact et donc la fin de l'opération.

Par ailleurs, la matière fondue qui reflue est piégée dans l'espace 12 entre le muret 10 et le retour 2.

Toutefois, alors que par ce mode d'assemblage à champ couvert, la jonction entre les pièces n'est pas visible, dans la configuration représentée, la bavure située à la base de l'espace 12 demeure visible depuis l'arrière.

Pour éliminer ce dernier inconvénient, l'invention vise une variante améliorée illustrée aux figures 4a et 4b.

Dans cette variante, les retours 20 et 21 de la peau 1 et de la doublure 3 sont inclinés d'environ 20°, l'un évasé vers l'extérieur et l'autre refermé vers l'intérieur, tandis que la pression P conserve la même direction. Il en résulte que, entre la position avant soudage (figure 4a) et la position après soudage (figure 4b), l'espace 22 entre les retours 20 et 21 se restreint, et la bavure 23 n'est pas visible depuis l'arrière de la trappe.

Bien entendu, la distance d1 entre les retours 20 et 21 avant interpénétration verticale au moment de la fusion doit être telle que, après interpénétration, il subsiste toujours l'espace d égal à la demi-amplitude de vibration, comme dans le cas de la figure 3.

La butée 24, limitant cette interpénétration, peut être soit directement contre le rebord 21, comme représenté, sous forme d'un épaulement, soit décalée vers l'arrière, comme la butée 11.

La réalisation des figures 3, 4a, 4b vise la variante à assemblage à champ couvrant.

Pour certains produits, l'invention vise un second mode de réalisation, visant l'assemblage à joint latéral, qui est illustré par la figure 5.

Dans le cas représenté, la peau 40 et la doublure 41 comportent chacune un retour, respectivement 42 et 43 dont les champs viennent en contact à l'extérieur de la surface latérale du produit considéré.

Selon l'invention, l'épaisseur e du retour 43 de la peau 40, qui est au plus égale à l'épaisseur e de sa portion centrale, se subdivise en un champ de contact 44 avec le champ de contact 45 du retour 42 de la doublure 41, et un muret 46, destiné à assurer la jonction par soudage, selon le procédé précité, avec la face interne 47 de la doublure 41, le champ de contact 44 et le muret 46 étant séparés par une rainure 48, destinée à permettre le débattement de la pièce 41 au cours de la vibration ; en d'autres termes, la largeur de la rainure 48 doit être également de l'ordre de d.

Dans cette réalisation, le contact des champs 44 - 45 joue le rôle de la butée 11, 24, étant entendu que ce contact interdit au surplus le reflux vers l'extérieur de matière fondue au moment du soudage.

Plus précisément, selon l'invention, la profondeur de la rainure 48 est telle qu'elle constitue en principe un volume suffisant pour recevoir la bavure de matière fondue provenant du muret 46 et de la face 47 en contact au moment de leur interpénétration. Si la quantité de matière fondue est supérieure à ce volume, et tend à s'échapper entre les champs 44 - 45, le contact de ces champs à l'achèvement de la soudure viendra sectionner cette bavure, ou tout au moins l'isoler à l'extérieur de la pièce, en en facilitant l'élimination.

L'intérêt de ce second mode de réalisation est qu'il ne privilégie pas l'une des deux pièces 40, 41, dont les rôles sont complètement interchangeables.

On notera que, dans le cas de pièces rectangulaires, l'intervalle d mesuré dans la direction parallèle au sens V des vibrations peut encore être réduit au-dessous de la limite inférieure indiquée ci-dessus, puisqu'il demeure constant dans cette direction, les deux bords considérés demeurant parallèles à cette distance constante.

## Revendications

1. Procédé pour la jonction, par la technique de soudage par vibration, de deux pièces en matière thermoplastique, une première pièce (1, 3 ; 40, 41) présentant une première surface et une seconde pièce (3, 1 ; 41, 40) comportant un cordon ou "muret" (5, 5' ; 10, 21, 46) sur une seconde surface en regard de ladite première surface, le champ de ce muret (5, 5' ; 10, 21, 46) venant en pression contre ladite première surface de manière que, par mise en vibration (V) de l'une desdites pièces (3, 1 ; 41, 40) au contact de l'autre, un phénomène de fusion sans chauffage de la matière des deux pièces (1, 3 ; 40, 41) assure la jonction entre ledit champ dudit muret (5, 5' ; 10, 21, 46) de la seconde pièce (3, 1 ; 41, 40) et ladite première surface de la première pièce (1, 3 ; 40, 41), **caractérisé en ce que**, ladite première surface étant une surface intérieure lisse de la première pièce (1, 3 ; 40, 41) et ladite seconde surface portant ledit muret (5, 5' ; 10, 21, 46) étant une surface intérieure de la seconde pièce (3, 1 ; 41, 40), en vue d'assurer la soudure du champ dudit muret (5, 5' ; 10, 21, 46) contre ladite surface intérieure lisse sans affecter l'état de la surface extérieure 4 correspondante de la première pièce (1, 3 ; 40, 41), on munit au moins l'une des deux pièces (1, 3 ; 40, 41) d'un rebord ou retour périphérique (2, 20, 21 ; 42, 43), de telle manière que ledit muret (5, 5' ; 10, 21, 46) soit situé d'une part à la distance la plus faible possible du bord extérieur (2, 20, 21 ; 42, 43) de la pièce qui le porte et, dans le cas où la pièce (1, 3 ; 40, 41) qui le porte présente un tel rebord (2, 20, 21 ; 42, 43), qu'il fasse de préférence partie intégrante dudit rebord (10, 21), et soit d'autre part à une distance du bord de l'autre pièce (1, 3 ; 40, 41) au moins égale à la moitié de l'amplitude de ladite vibration (V).

2. Procédé selon la revendication 1, caractérisé en ce que, l'assemblage des deux pièces est du type à champ couvrant, la première pièce constituant une pièce intérieure (3) et la seconde pièce constituant une pièce extérieure (1), chacune desdites pièces (3, 1), intérieure et extérieure, présentant un rebord (2, 20), ledit muret (10, 21) constitue lui-même ledit rebord ou retour de la pièce intérieure (3) et est situé à une distance du rebord ou retour intérieur (2, 20) de la pièce extérieure (1) approximativement égale à la demi-amplitude de ladite vibration (V).

3. Procédé selon la revendication 2, caractérisé en ce qu'au-delà dudit muret (10, 21) est prévue sur la pièce intérieure (3) une butée (11, 24) ayant une hauteur inférieure à celle dudit muret (10, 21) d'une valeur égale à la distance d'interpénétration dudit muret (10, 21) dans la surface de la pièce extérieure (1).

4. Procédé selon l'une des revendications 2 et 3, caractérisé en ce que les retours (2, 10) des deux pièces (1, 3) sont perpendiculaires aux faces en regard desdites pièces (1, 3).

5. Procédé selon l'une des revendications 2 et 3, caractérisé en ce que les retours (20, 21) sont inclinés, le retour (20) de la pièce extérieure (1) étant évasé vers l'extérieur, l'écart (d1) entre les retours (20, 21) avant soudure étant tel qu'après enfoncement au moment de la soudure, l'écart subsistant (d) est approximativement égal à la demi-amplitude de ladite vibration (V).

6. Procédé selon la revendication 1, caractérisé en ce que l'assemblage des deux pièces est du type à joint latéral, chacune des deux pièces (40, 41) présentant un rebord (42, 43) ou retour, les champs (44, 45) des retours (42, 43) des deux pièces (40, 41) venant en contact au niveau de la face latérale de l'article obtenu à l'issue du soudage desdites pièces (40, 41), l'épaisseur du retour (43) de la pièce (40) portant le muret est subdivisé en un champ de contact (44) avec le retour de l'autre pièce (41), et un muret (46) au contact de la surface interne de ladite autre pièce, ledit champ de contact (44) et ledit muret (46) étant séparés par une rainure (48) dont la largeur est approximativement égale à la demi-amplitude de la vibration (V), et dont la profondeur est suffisante pour recevoir au moins une partie de la bavure de matière fondue à l'emplacement de la jonction.

7. Procédé selon la revendication 6, caractérisé en ce que le muret (46) est créé indifféremment dans le retour de l'une ou de l'autre des deux pièces (40, 41) dont les rôles peuvent être inversés à volonté.

8. Procédé selon l'une quelconque des revendications 1 à 7, caractérisé en ce que, dans le cas d'un couple de pièces (1, 3 ; 40, 41) rectangulaires à réunir, la distance, dans la direction parallèle au sens des vibrations (V), du bord extérieur du muret au bord intérieur de l'autre pièce peut être réduite au-dessous de ladite demi-amplitude.

9. Articles réalisés par la jonction de deux pièces en matière thermoplastique, une première pièce (1, 3 ; 40, 41) présentant une première surface et une seconde pièce (3, 1 ; 41, 40) comportant un cordon (5, 5' ; 10, 21, 46) ou "muret" sur une seconde surface en regard de ladite première surface, le champ de ce muret (5, 5' ; 10, 21, 46) venant en pression contre ladite première surface de manière que, par mise en vibration de l'une desdites pièces (1, 3 ; 40, 41) au contact de l'autre, un phénomène de fusion sans chauffage de la matière des deux pièces (1, 3 ; 40, 41) assure la jonction entre ledit champ dudit muret (5, 5' ; 10, 21, 46) de la seconde pièce (3, 1 ; 41, 40) et ladite première surface de la première pièce (1, 3 ; 40, 41), caractérisés en ce que, ladite première surface étant une surface intérieure lisse de la première pièce (1, 3 ; 40, 41) et ladite seconde surface portant ledit muret (5, 5' ; 10, 21, 46) étant une surface intérieure de la seconde pièce (3, 1 ; 41, 40), la soudure du champ dudit muret (5, 5' ; 10, 21, 46) contre ladite surface intérieure lisse étant assurée sans affecter l'état de la surface extérieure correspondante de la première pièce (1, 3 ; 40, 41), l'une des deux pièces (1, 3 ; 40, 41) présente un rebord ou retour périphérique (2, 20, 21 ; 42, 43), de telle manière que ledit muret (5, 5' ; 10, 21, 46) soit situé d'une part à la distance la plus faible possible du bord extérieur (2, 20, 21 ; 42, 43) de la pièce qui le porte et, dans le cas où la pièce qui le porte présente un tel rebord (2, 20, 21 ; 42, 43), qu'il fasse de préférence partie intégrante dudit rebord (10, 21), et soit d'autre part à une distance du bord de l'autre pièce (1, 3 ; 40, 41) au moins égale à la moitié de l'amplitude de ladite vibration (V).

10. Article selon la revendication 9, caractérisé en ce qu'il consiste en une trappe à essence.

## Claims

1. Process for joining, by the technique of welding by vibration, two parts made of thermoplastic material, a first part (1, 3; 40, 41) having a first surface and a second part (3, 1; 41, 40) comprising a rim or "little wall" (5, 5'; 10, 21, 46) on a second surface facing the said first surface, the field of this little wall (5, 5'; 10, 21, 46) pressing against the said first surface in such a way that, as a result of the setting in vibration (V) of one of the said parts (3, 1; 41, 40) in contact with the other, a phenomenon of fusion without heating of the material of the two parts (1, 3; 40, 41) effects the join between the said field of the said little wall (5, 5'; 10, 21, 46) of the second part (3, 1; 40, 41) and the said first surface of the first part (1, 3; 40, 41), **characterised in that**, the said first surface being a smooth inner surface of the first part (1, 3; 40, 41) and the said second surface carrying the said little wall (5, 5'; 10, 21, 46) being an inner surface of the second part (3, 1; 40, 41), with a view to effecting the welding of the field of the said little wall (5, 5'; 10, 21, 46) against the said smooth inner surface without affecting the state of the corresponding outer surface 4 of the first part (1, 3; 40, 41), at least one of the two parts (1, 3; 40, 41) is provided with a peripheral flange or lip (2, 20, 21; 42, 43) in such a way that the said little wall (5, 5'; 10, 21, 46) is situated, on the one hand, at the smallest possible distance from the outer edge (2, 20, 21; 42, 43) of the part that carries it and, in the event of the part (1, 3; 40, 41) that carries it having a flange (2, 20, 21; 42, 43) of this kind, that it preferably forms an integral part of the said flange (10, 21), and is, on the other hand, at a distance from the edge of the other part (1, 3; 40, 41) which is at least equal to half the amplitude of the said vibration (V).

2. Process according to claim 1, characterised in that the combination of the two parts is of the type having a covering field, the first part constituting an inner part (3) and the second part constituting an outer part (1), each of the said inner and outer parts (3, 1) having a flange (2, 20), the said little wall (10, 21) itself constitutes the said flange or lip of the inner part (3) and is situated at a distance from the inner flange or lip (2, 20) of the outer part (1) which is approximately equal to the half-amplitude of the said vibration (V).

3. Process according to claim 2, characterised in that, beyond the said little wall (10, 21), there is provided, on the inner part (3), a stop (11, 24) having a height which is lower than that of the said little wall (10, 21) by a value equal to the distance of interpenetration of the said little wall (10, 21) into the surface of the outer part (1).

4. Process according to one of claims 2 and 3, characterised in that the lips (2, 10) of the two parts (1, 3) are perpendicular to the mutually facing faces of the said parts (1, 3).

5. Process according to one of claims 2 and 3, characterised in that the lips (20, 21) are inclined, the lip (20) of the outer part (1) being widened out towards the outside, the gap (d1) between the lips (20, 21) before welding being such that, after settlement at the moment of welding, the gap (d) remaining is approximately equal to the half-amplitude of the said vibration (V).

6. Process according to claim 1, characterised in that the combination of the two parts is of the type having a lateral joint, each of the two parts (40, 41) having a flange (42, 43) or lip, the fields (44, 45) of the lips (42, 43) of the two parts (40, 41) coming into contact at the level of the lateral face of the article obtained at the conclusion of the welding of the said parts (40, 41), the thickness of the lip (43) of the part (40) carrying the little wall is subdivided into a field of contact (44) with the lip of the other part (41), and a little wall (46) in contact with the inner surface of the said other part, the said field of contact (44) and the said little wall (46) being separated by a groove (48), the width of which is approximately equal to the half-amplitude of the vibration (V), and the depth of which is sufficient to receive at least part of the burr of melted material at the location of the join.

7. Process according to claim 6, characterised in that the little wall (46) is formed in the lip of one or other of the two parts (40, 41) indiscriminately, the roles of which parts can be reversed at will.

8. Process according to any one of claims 1 to 7, characterised in that, in the case of a couple of rectangular parts (1, 3; 40, 41) which are to be joined together, the distance, in the direction parallel to the directions of the vibrations (V), from the outer edge of the little wall to the inner edge of the other part can be reduced to below the said half-amplitude.

9. Articles produced by joining two parts made of thermoplastic material, a first part (1, 3; 40, 41) having a first surface and a second part (3, 1; 41, 40) comprising a rim (5, 5'; 10, 21, 46) or "little wall" on a second surface facing the said first surface, the field of this little wall (5, 5'; 10, 21, 46) pressing against the said first surface in such a way that, as a result of the setting in vibration of one of the said parts (1, 3; 40, 41) in contact with the other, a phenomenon of fusion without heating of the material of the two parts (1, 3; 40, 41) effects the join between the said field of the said little wall (5, 5'; 10, 21, 46) of the second part (3, 1; 40, 41) and the said first surface of the first part (1, 3; 40, 41), characterised in that, the said first surface being a smooth inner surface of the first part (1, 3; 40, 41) and the said second surface carrying the said little wall (5, 5'; 10, 21, 46) being an inner surface of the second part (3, 1; 41, 40), the welding of the field of the said little wall (5, 5'; 10, 21, 46) against the said smooth inner surface being effected without affecting the state of the corresponding outer surface of the first part (1, 3; 40, 41), one of the two parts (1, 3; 40, 41) has a peripheral flange or lip (2, 20, 21; 42, 43) in such a way that the said little wall (5, 5'; 10, 21, 46) is situated, on the one hand, at the smallest possible distance from the outer edge (2, 20, 21; 42, 43) of the part that carries it and, in the event of the part that carries it having a flange (2, 20, 21; 42, 43) of this kind, that it preferably forms an integral part of the said flange (10, 21), and is, on the other hand, at a distance from the edge of the other part (1, 3; 40, 41) which is at least equal to half the amplitude of the said vibration (V).

10. Article according to claim 9, characterised in that it consists of a petrol hatch.

## Patentansprüche

1. Verfahren zum Verbinden zweier Teile aus thermoplastischem Material mittels der Vibrationsschweißtechnik, wobei ein erstes Teil (1, 3; 40, 41) eine erste Oberfläche aufweist und ein zweites Teil (3, 1; 41, 40) an einer zweiten Oberfläche gegenüber der ersten Oberfläche einen Wulst oder einen "Maueransatz" (5, 5'; 10, 21, 46) aufweist, wobei das Feld dieses Maueransatzes (5, 5'; 10, 21, 46) gegen die erste Oberfläche in der Weise drückt, daß bei Versetzung in Schwingungen (V) eines der Teile (3, 1; 41, 40), das mit dem anderen in Kontakt ist, ein Verschmelzungsphänomen ohne Erwärmung des Materials der beiden Teile (1, 3; 40, 41) die Verbindung zwischen dem Feld des Maueransatzes (5, 5'; 10, 21, 46) des zweiten Teils (3, 1; 41, 40) und der ersten Oberfläche des ersten Teils (1, 3; 40, 41) sicherstellt, **dadurch gekennzeichnet, daß** dann, wenn die erste Oberfläche eine glatte Innenoberfläche des ersten Teils (1, 3; 40, 41) ist und die zweite Oberfläche, die den Maueransatz (5, 5'; 10, 21, 46) trägt, eine Innenoberfläche des zweiten Teils (3, 1; 41, 40) ist, für eine Sicherstellung der Verschweißung des Feldes des Maueransatzes (5, 5'; 10, 21, 46) an der glatten Innenoberfläche ohne Beeinflussung des Zustands der entsprechenden äußeren Oberfläche (4) des ersten Teils (1, 3; 40, 41) wenigstens eines der beiden Teile (1, 3; 40, 41) mit einer vorstehenden Umfangskante oder einem Umfangsvorsprung (2, 20, 21; 42, 43) in der Weise versehen ist, daß der Maueransatz (5, 5'; 10, 21, 46) sich einerseits im kleinstmöglichen Abstand vom äußeren Rand (2, 20, 21; 42, 43) des Teils, das ihn trägt, befindet und, in dem Fall, in dem das Teil (1, 3; 40, 41), das ihn trägt, eine solche vorstehende Kante (2, 20, 21; 42, 43) aufweist, er vorzugsweise einteilig mit dieser vorstehenden Kante (10, 21) ausgebildet ist, und sich andererseits in einem Abstand vom Rand des anderen Teils (1, 3; 40, 41) befindet, der wenigstens gleich der halben Amplitude der Schwingung (V) ist.

2. Verfahren nach Anspruch 1, dadurch gekennzeichnet, daß dann, wenn die Montage der beiden Teile vom Typ mit abdeckendem Feld ist, wobei das erste Teil ein inneres Teil (3) und das zweite Teil ein äußeres Teil (1) bildet, wobei jedes der Teile (3, 1), d. h. das innere und das äußere Teil, eine vorstehende Kante (2, 20) aufweist, der Maueransatz (10, 21) seinerseits die vorstehende Kante oder den Vorsprung des inneren Teils (3) bildet und sich in einem Abstand von der inneren vorstehenden Kante oder dem inneren Vorsprung (2, 20) des äußeren Teils (1) befindet, der angenähert gleich der halben Amplitude der Schwingung (V) ist.

3. Verfahren nach Anspruch 2, dadurch gekennzeichnet, daß jenseits des Maueransatzes (10, 21) am inneren Teil (3) ein Anschlag (11, 24) vorgesehen ist, dessen Höhe um einen Wert, der gleich der Eindringstrecke des Maueransatzes (10, 21) in die Oberfläche des äußeren Teils (1) ist, geringer als die Höhe des Maueransatzes (10, 21) ist.

4. Verfahren nach einem der Ansprüche 2 und 3, dadurch gekennzeichnet, daß die Vorsprünge (2, 10) der beiden Teile (1, 3) zu den Flächen gegenüber den Teilen (1, 3) senkrecht sind.

5. Verfahren nach einem der Ansprüche 2 und 3, dadurch gekennzeichnet, daß die Vorsprünge (20, 21) geneigt sind, wobei der Vorsprung (20) des äußeren Teils (1) nach außen konisch erweitert ist, wobei der Abstand (d1) Zwischen den Vorsprüngen (20, 21) vor dem Verschweißen derart ist, daß nach dem Eindringen zum Zeitpunkt des Verschweißens der verbleibende Abstand (d) angenähert gleich der halben Amplitude der Schwingung (V) ist.

6. Verfahren nach Anspruch 1, dadurch gekennzeichnet, daß die Zusammenfügung der beiden Teile vom Typ mit seitlichem Stoß ist, wobei jedes der beiden Teile (40, 41) eine vorstehende Kante (42, 43) oder einen Vorsprung aufweist, wobei die Felder (44, 45) der Vorsprünge (42, 43) der beiden Teile (40, 41) auf Höhe der Seitenfläche des am Ende des Verschweißens der beiden Teile (40, 41) erhaltenen Gegenstands in Kontakt gelangen, wobei die Dicke des Vorsprungs (43) des den Maueransatz tragenden Teils (40) in ein Feld (44) für den Kontakt mit dem Vorsprung des anderen Teils (41) und in einen Maueransatz (46), der mit der Innenoberfläche des anderen Teils in Kontakt ist, unterteilt ist, wobei das Kontaktfeld (44) und der Maueransatz (46) durch eine Rinne (48) getrennt sind, dessen Breite angenähert gleich der halben Amplitude der Schwingung (V) ist und deren Tiefe ausreicht, um wenigstens einen Teil des Grats des Materials aufzunehmen, das am Ort der Verbindung schmilzt.

7. Verfahren nach Anspruch 6, dadurch gekennzeichnet, daß der Maueransatz (46) beliebig im Vorsprung des einen oder des anderen der beiden Teile (40, 41), deren Rollen nach Belieben vertauscht werden können, erzeugt wird.

8. Verfahren nach irgendeinem der Ansprüche 1 bis 7, dadurch gekennzeichnet, daß im Fall eines Paars von zu vereinigenden rechtwinkligen Teilen (1, 3; 40, 41) der Abstand des äußeren Randes des Maueransatzes zum inneren Rand des anderen Teils in der zur Schwingungsrichtung (V) parallelen Richtung unter die halbe Amplitude verringert werden kann.

9. Gegenstände, die durch Verbinden von zwei Teilen aus thermoplastischem Material verwirklicht werden, wobei ein erstes Teil (1, 3; 40, 41) eine erste Oberfläche aufweist und ein zweites Teil (3, 1; 41, 40) an einer zweiten Oberfläche gegenüber der ersten Oberfläche einen Wulst (5, 5'; 10, 21, 46) oder einen Maueransatz aufweist, wobei das Feld dieses Maueransatzes (5, 5'; 10, 21, 46) gegen die erste Oberfläche in der Weise drückt, daß durch Versetzen in Schwingungen eines der Teile (1, 3; 40, 41), das mit dem anderen in Kontakt ist, ein Schmelzphänomen ohne Erhitzen des Materials der beiden Teile (1, 3; 40, 41) die Verbindung zwischen dem Feld des Maueransatzes (5, 5'; 10, 21, 46) des zweiten Teils (3, 1; 41, 40) mit der ersten Oberfläche des ersten Teils (1, 3; 40, 41) sicherstellt, dadurch gekennzeichnet, daß dann, wenn die erste Oberfläche eine glatte innere Oberfläche des ersten Teils (1, 3; 40, 41) ist und die zweite Oberfläche, die den Maueransatz (5, 5'; 10, 21, 46) trägt, eine innere Oberfläche des zweiten Teils (3, 1; 41, 40) ist und die Verschweißung des Feldes des Maueransatzes (5, 5'; 10, 21, 46) an der glatten Innenoberfläche sichergestellt wird, ohne den Zustand der entsprechenden Außenoberfläche des ersten Teils (1, 3; 40, 41) zu beeinflussen, eines der beiden Teile (1, 3; 40, 41) eine vorstehende Umfangskante oder einen Umfangsvorsprung (2, 20, 21; 42, 43) aufweist, derart, daß sich der Maueransatz (5, 5'; 10, 21, 46) einerseits in dem geringstmöglichen Abstand vom äußeren Rand (2, 20, 21; 42) des ihn tragenden Teils befindet, wobei er in dem Fall, in dem das ihn tragende Teil eine solche vorstehende Kante (2, 20, 21; 42, 43) aufweist, vorzugsweise einteilig mit dieser vorstehenden Kante (10, 21) ausgebildet ist, und sich andererseits in einem Abstand vom Rand des anderen Teils (1, 3; 40, 41) befindet, der wenigstens gleich der Hälfte der Amplitude der Schwingung (V) ist.

10. Gegenstand nach Anspruch 9, dadurch gekennzeichnet, daß er aus einer Kraftstoffklappe besteht.
